# EUROPEAN PATENT APPLICATION

(11) **EP 4 848 265 A1**
(43) Date of publication of application: **02.12.2026**
(21) Application number: 25833556.1
(22) Date of filing: 15.05.2025
(51) Int. Cl.: G09G 3/20, G09G 5/00, G06F 3/14

(54) **ELECTRONIC DEVICE AND CONTROL METHOD THEREOF**

(30) Priority: 03.07.2024 KR 20240087263
(71) Applicant: Samsung Electronics Co., Ltd., Suwon-si, Gyeonggi-do 16677 (KR)
(72) Inventor: LEE, Gwangho, Suwon-si, Gyeonggi-do 16677 (KR); LEE, Joowon, Suwon-si, Gyeonggi-do 16677 (KR)
(74) Representative: Appleyard Lees IP LLP
(86) International application number: PCT/KR2025/095316
(87) International publication number: WO 2026/010474

(57) **Abstract**

An electronic apparatus includes an interface configured to receive an image signal to be displayed on a display apparatus, memory storing at least one instruction, and at least one processor configured to, by executing at least one instruction, provide image data corresponding to the image signal to the display apparatus, and the at least one processor is configured to obtain luminance information of the image data based on the image signal to be displayed on the display apparatus, obtain luminance information of another display apparatus in the display group, and obtain a luminance correction value to be commonly applied to a plurality of display apparatuses in the display group based on the obtained luminance information of the image data and the luminance information of the other display apparatus.

## Description

### Technical Field

The present disclosure relates to an electronic apparatus and a control method thereof, and more particularly, to an electronic apparatus in which a plurality of display apparatuses can apply a common energy saving technology and a control method thereof.

### Background Art

Recently, various LED modular display systems have been developed. An LED modular display system may be implemented in a state in which a plurality of LED display apparatuses are physically connected, and may provide visual satisfaction to a user by displaying a high-resolution image through a large screen.

However, as the plurality of LED display apparatuses display a high-resolution image, the LED modular display system may consume a very large amount of power. Accordingly, a need for a technology capable of reducing power consumption of the LED modular display system is emerging.

### Disclosure of Invention

### Solution to Problem

An electronic apparatus connected to one display apparatus that belongs to a display group includes an interface configured to receive an image signal to be displayed on the display apparatus, memory storing at least one instruction and at least one processor configured to, by executing the at least one instruction, provide image data corresponding to the image signal to the display apparatus, and the at least one processor is configured to obtain luminance information of the image data based on the image signal to be displayed on the display apparatus, and obtain luminance information of another display apparatus in the display group, and obtain a luminance correction value to be commonly applied to a plurality of display apparatuses in the display group based on luminance information of the display apparatus and luminance information of the another display apparatus.

The at least one processor may be configured to obtain at least one of first luminance information corresponding to motion information in the image data or second luminance information corresponding to complexity in the image data.

The at least one processor may be configured to obtain luminance information of the image data by combining the first luminance information and the second luminance information.

The at least one processor may be configured to identify first selection information among first luminance information of the display apparatus and first luminance information of the another display apparatus based on a preset criterion, identify second selection information among second luminance information of the display apparatus and second luminance information of the another display apparatus, and obtain a luminance correction value using the first selection information and the second selection information.

The at least one processor may be configured to obtain illuminance information detected by a sensor of the display apparatus, and obtain third luminance information based on the obtained illuminance information.

The at least one processor may be configured to select one of a first numerical value of the luminance information of the display apparatus and a second numerical value of the luminance information of the another display apparatus based on a preset criterion, and obtain a luminance correction value to be commonly applied to a plurality of display apparatuses in the display group.

The at least one processor may be configured to control the interface to provide the obtained luminance correction value to the display apparatus.

The interface may include a communication interface configured to transmit and receive information to and from another electronic apparatus or another display apparatus in the display group, and the at least one processor may be configured to control the communication interface to provide the obtained luminance correction value to the another electronic apparatus or the another display apparatus.

The at least one processor may be configured to correct the image signal to be provided to the display apparatus corresponding to the obtained luminance correction value, and control the interface to provide the corrected image signal to the display apparatus.

The at least one processor may be configured to store the obtained luminance correction value in the memory, and update the luminance correction value when a scene of the image data is changed or a preset period has elapsed.

A control method of an electronic apparatus connected to one display apparatus that belongs to a display group includes obtaining luminance information of image data based on an image signal to be displayed on the display apparatus, obtaining luminance information of another display apparatus in the display group, and obtaining a luminance correction value to be commonly applied to a plurality of display apparatuses in the display group based on luminance information of the display apparatus and luminance information of another display apparatus.

The obtaining luminance information may include obtaining at least one of first luminance information corresponding to motion information in the image data or second luminance information corresponding to complexity in the image data.

The obtaining luminance information may include obtaining luminance information of the image data by combining the first luminance information and the second luminance information.

The obtaining a luminance correction value may include identifying first selection information among first luminance information of the display apparatus and first luminance information of the another display apparatus based on a preset criterion, identifying second selection information among second luminance information of the display apparatus and second luminance information of the another display apparatus, and obtaining a luminance correction value using the first selection information and the second selection information.

The obtaining luminance information may include obtaining illuminance information detected by a sensor of the display apparatus, and obtaining third luminance information based on the obtained illuminance information.

The obtaining a luminance correction value may include selecting one of a first numerical value of the luminance information of the display apparatus and a second numerical value of the luminance information of the another display apparatus based on a preset criterion, and obtaining a luminance correction value to be commonly applied to a plurality of display apparatuses in the display group.

The method may further include providing the obtained luminance correction value to the display apparatus.

The method may further include providing the obtained luminance correction value to another electronic apparatus or another display apparatus.

The method may further include correcting the image signal to be provided to the display apparatus corresponding to the obtained luminance correction value, and providing the corrected image signal to the display apparatus.

In a non-transitory computer-readable recording medium storing a program for executing a control method of an electronic apparatus connected to one display apparatus that belongs to a display group, the control method includes obtaining luminance information of image data based on an image signal to be displayed on the display apparatus, obtaining luminance information of another display apparatus in the display group, and obtaining a luminance correction value to be commonly applied to a plurality of display apparatuses in the display group based on luminance information of the display apparatus and luminance information of another display apparatus.

### Brief Description of Drawings

The above-described or other aspects, features, and advantages of embodiments of the present disclosure will become more apparent from the following description with reference to the accompanying drawings. In the accompanying drawings:
FIG. 1 is a view provided to explain an operation of a display system according to one or more embodiments;
FIG. 2 is a block diagram provided to explain a configuration of an electronic apparatus according to one or more embodiments;
FIG. 3 is a view provided to explain an operation of a display system according to one or more embodiments;
FIG. 4 is a view provided to explain a display operation in a display system according to one or more embodiments;
FIG. 5 is a view provided to explain an example of an operation of calculating a correction value according to an embodiment;
FIG. 6 is a view provided to explain an operation of calculating a correction value according to another embodiment;
FIG. 7 is a view provided to explain an operation of calculating a correction value according to another embodiment;
FIG. 8 is a view provided to explain a configuration of a display apparatus according to one or more embodiments;
FIG. 9 is a block diagram provided to explain a configuration of a display module according to one or more embodiments;
FIG. 10 is a flowchart provided to explain a control method according to one or more embodiments;
FIG. 11 is a flowchart provided to explain a control operation of an electronic apparatus according to an embodiment; and
FIG. 12 is a flowchart provided to explain an operation of a display module according to an embodiment.

### Mode for Invention

The embodiments may be variously modified and may have various embodiments, and specific embodiments will be illustrated in the drawings and described in detail in the detailed description. However, this is not intended to limit the scope to specific embodiments, and it should be understood to include various modifications, equivalents, and/or alternatives of the embodiments of the present disclosure. In connection with the description of the drawings, similar reference numerals may be used for similar components.

In describing the present disclosure, when it is determined that a detailed description of a related known function or configuration may unnecessarily obscure the gist of the present disclosure, the detailed description thereof will be omitted.

In addition, the following embodiments may be modified into various other forms, and the scope of the technical spirit of the present disclosure is not limited to the following embodiments. Rather, these embodiments are provided to make the present disclosure more thorough and complete and to fully convey the technical spirit of the present disclosure to those skilled in the art.

The terms used in the present disclosure are used merely to describe specific embodiments and are not intended to limit the scope of rights. A singular expression includes a plural expression unless the context clearly indicates otherwise.

In the present disclosure, expressions such as "have," "may have," "include," or "may include" indicate the presence of a corresponding feature (for example, a component such as a numerical value, a function, an operation, or a part), and do not exclude the presence of an additional feature.

In the present disclosure, expressions such as "A or B," "at least one of A or/and B," or "one or more of A or/and B" may include all possible combinations of the items listed together. For example, "A or B," "at least one of A and B," or "at least one of A or B" may refer to all of (1) including at least one A, (2) including at least one B, or (3) including both at least one A and at least one B.

Expressions such as "first," "second," "the first," or "the second" used in the present disclosure may modify various components regardless of order and/or importance, and are used merely to distinguish one component from another component and do not limit the components.

When a component (for example, a first component) is referred to as being "(operatively or communicatively) coupled with/to" or "connected to" another component (for example, a second component), it should be understood that the component may be directly connected to the other component or may be connected through another component (for example, a third component).

On the other hand, when a component (for example, a first component) is referred to as being "directly coupled" or "directly connected" to another component (for example, a second component), it may be understood that another component (for example, a third component) does not exist between the component and the other component.

The expression "configured to (or set to)" used in the present disclosure may be interchangeably used, depending on the circumstances, with, for example, "suitable for," "having the capacity to," "designed to," "adapted to," "made to," or "capable of." The term "configured to (or set to)" may not necessarily mean "specifically designed to" in terms of hardware.

Instead, in some circumstances, the expression "an apparatus configured to" may mean that the apparatus is "capable of" performing an operation together with another apparatus or components. For example, the phrase "a processor configured (or set) to perform A, B, and C" may mean a dedicated processor (for example, an embedded processor) for performing the corresponding operations, or a generic-purpose processor (for example, a CPU or an application processor) capable of performing the corresponding operations by executing one or more software programs stored in a memory apparatus.

In an embodiment, a "module" or a "unit" performs at least one function or operation, and may be implemented as hardware or software, or may be implemented as a combination of hardware and software. In addition, a plurality of "modules" or a plurality of "units," except for a "module" or a "unit" that needs to be implemented as specific hardware, may be integrated into at least one module and implemented as at least one processor.

According to various embodiments, operations performed by a module, a program, or another component may be executed sequentially, in parallel, repeatedly, or heuristically, at least some operations may be executed in a different order or omitted, or another operation may be added.

Meanwhile, various elements and regions in the drawings are schematically illustrated. Accordingly, the technical spirit of the present disclosure is not limited by relative sizes or spacing illustrated in the accompanying drawings.

Meanwhile, an electronic apparatus according to various embodiments of the present disclosure may include, for example, at least one of a smartphone, a tablet PC, a desktop PC, a set-top box, a laptop PC, or a wearable apparatus.

In some embodiments, the electronic apparatus may include, for example, at least one of a television, a digital video disk (DVD) player, an audio apparatus, a refrigerator, an air conditioner, a cleaner, an oven, a microwave oven, a washing machine, an air purifier, a set-top box, a home automation control panel, a security control panel, a media box (for example, Samsung HomeSync^{™}, Apple TV^{™}, or Google TV^{™}), a game console (for example, Xbox^{™} or PlayStation^{™}), an electronic dictionary, an electronic key, a camcorder, or an electronic picture frame. Meanwhile, among the above-described electronic apparatuses, an apparatus including a display may be referred to as a display apparatus. Meanwhile, the electronic apparatus of the present disclosure may be a set-top box or a PC that provides an image to a display apparatus even without including a display.

Hereinafter, embodiments according to the present disclosure will be described in detail with reference to the accompanying drawings so that those skilled in the art to which the present disclosure pertains may easily implement the embodiments.

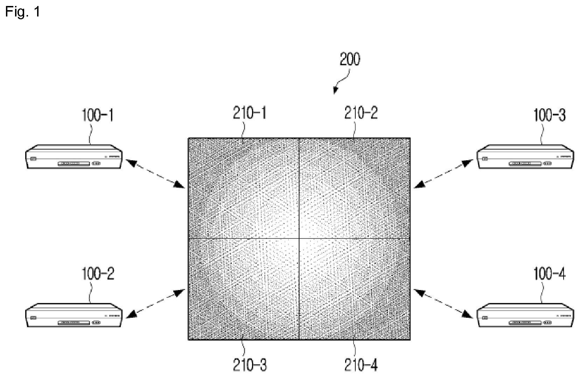

FIG. 1 is a view provided to explain an operation of a display system according to one or more embodiments.

According to FIG. 1, the display system may include a display group 200 including a plurality of electronic apparatuses 100-1, 100-2, 100-3, and 100-4 and a plurality of display apparatuses 210-1, 210-2, 210-3, and 210-4.

The display group 200 according to one or more embodiments of the present disclosure may include the plurality of display apparatuses 210-1, 210-2, 210-3, and 210-4. Each of the plurality of display apparatuses 210-1, 210-2, 210-3, and 210-4 may receive an image signal corresponding to a position of each of the plurality of display apparatuses 210-1, 210-2, 210-3, and 210-4 and display the received image signal.

As illustrated in FIG. 1, it is assumed that the display group 200 includes a first display apparatus 210-1, a second display apparatus 210-2, a third display apparatus 210-3, and a fourth display apparatus 210-4, the first display apparatus 210-1 is positioned in an upper left region, the second display apparatus 210-2 is positioned in an upper right region, the third display apparatus 210-3 is positioned in a lower left region, the fourth display apparatus 210-4 is positioned in a lower right region, and the display group 200 displays one image.

In this case, the first display apparatus 210-1 may receive an image signal corresponding to an upper right region among the four regions into which the image is divided and display an image, the second display apparatus 210-2 may receive an image signal corresponding to an upper left region among the four regions into which the image is divided and display an image, the third display apparatus 210-3 may receive an image signal corresponding to a lower right region among the four regions into which the image is divided and display an image, and the fourth display apparatus 210-4 may receive an image signal corresponding to a lower left region and display an image.

When a power saving mode is set, the conventional display apparatus may reduce power consumption by adjusting image brightness corresponding to ambient illuminance, or may reduce power consumption by adjusting image brightness in an image in which it is difficult for a user to perceive a reduction in luminance (for example, an image having high complexity).

However, the conventional method was independently applied in individual apparatuses. Accordingly, the plurality of display apparatuses 210-1, 210-2, 210-3, and 210-4 individually perform individual brightness adjustment based on images to be displayed thereby, and adjustment values having different ratios may be used for the plurality of display apparatuses 210-1, 210-2, 210-3, and 210-4.

For example, different values, rather than a common value, may be used, such as no luminance adjustment being performed for the first display apparatus 210-1, a 5% reduction for the second display apparatus 210-2, a 3% reduction for the third display apparatus 210-3, and a 3% reduction for the fourth display apparatus 210-4. When operating with different values as described above, there has been a problem in that the difference may be highlighted at boundaries between the display apparatuses.

Since a display system to which the present disclosure is applied may have a very large screen, application of a technology for reducing power consumption was necessary.

In order to solve such a problem, the plurality of electronic apparatuses 100-1, 100-2, 100-3, and 100-4 respectively connected to the plurality of display apparatuses 210-1, 210-2, 210-3, and 210-4 obtain luminance information of a screen to be displayed on each display apparatus, and calculate and use a luminance correction value to be commonly applied to the plurality of display apparatuses in the display system through a process of sharing the obtained luminance information.

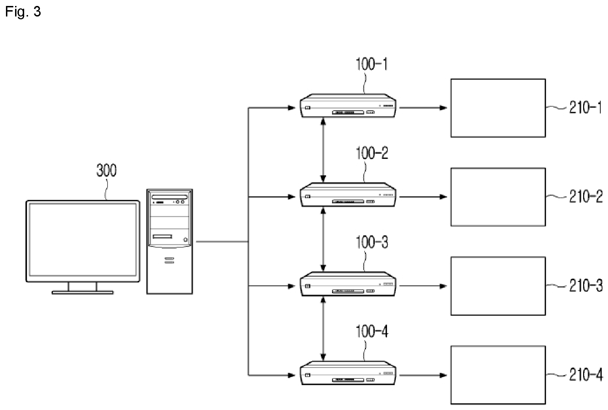

A specific method of calculating the luminance correction value in each of the plurality of electronic apparatuses 100-1, 100-2, 100-3, and 100-4 will be described in detail with reference to FIGS. 3 to 10 below.

Each of the plurality of display apparatuses 210-1, 210-2, 210-3, and 210-4 displays an image based on a corrected image signal to which the corresponding luminance correction value is applied by using the calculated luminance correction value, and thus, the display group 200 displays an image to which a common luminance correction value is applied, thereby reducing power consumption without degradation of image quality.

In addition, the display group 200 may be referred to by being replaced with various expressions indicating the same/similar concept. For example, the display group 200 may be replaced with various expressions such as a "digital signage apparatus," a "modular display apparatus," a "signage system," and a "modular display system." However, in the present disclosure, these will be collectively referred to by the expression "display group 200."

In addition, each of the plurality of display apparatuses 210-1, 210-2, 210-3, and 210-4 may be referred to by being replaced with various expressions indicating the same or similar concept. For example, the display apparatus may be replaced with the expression "display cabinet." However, in the present disclosure, these will be collectively referred to by the expression "display apparatus."

In the present disclosure, an "edge region of the display group 200" may refer to a region of pixels present at an edge portion of the display group 200. For example, when the display group 200 is an 8K-resolution (7680 × 4320 pixels) display, the "edge region of the display group 200" may include a region in which 7,680 pixels adjacent to a horizontal bezel positioned at an upper portion of the display, 7,680 pixels adjacent to a horizontal bezel positioned at a lower portion of the display, 4,320 pixels adjacent to a vertical bezel positioned at a left side of the display, and 4,320 pixels adjacent to a vertical bezel positioned at a right side of the display are positioned.

In addition, the "edge region" may be referred to by being replaced with various expressions indicating the same/similar concept. For example, the "edge region" may be replaced with various expressions such as an "edge area," a "corner pixel region," an "edge pixel region," a "border region," and an "outer region." However, in the present disclosure, these will be collectively referred to by the expression "edge region."

Although FIG. 1 illustrates only that the display group 200 includes 2 × 2 display apparatuses, this is merely an example, and the display group 200 may include n × m display apparatuses (n and m are natural numbers equal to or greater than 2). In addition, although FIG. 1 illustrates only four electronic apparatuses 100-1, 100-2, 100-3, and 100-4 connected to four display apparatuses, this is merely an example, and the display group 200 may be implemented with n × m electronic apparatuses (n and m are natural numbers equal to or greater than 2).

Although the display group 200 is illustrated in FIG. 1 as having a rectangular shape, this is merely an example, and it is obvious that the display group 200 may be implemented in various shapes, such as a rhombus, a square, or a shape including a curved surface, according to shapes and arrangements of the display apparatuses included in the display group 200.

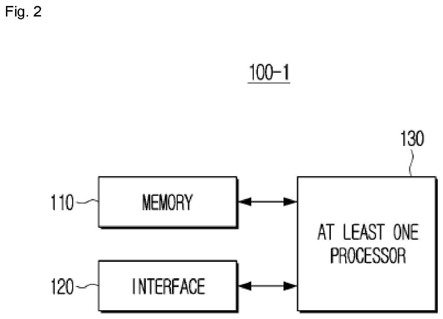

As described above, each of the plurality of electronic apparatuses 100-1, 100-2, 100-3, and 100-4 enables the plurality of display apparatuses in the display group 200 to display images whose luminance is corrected with a common luminance correction value, thereby achieving an effect of reducing power consumption of the display group 200 while preventing a user from perceiving a difference from an original image. In the description of FIG. 2 below, various embodiments of the present disclosure will be described together with configurations of each of the plurality of electronic apparatuses 100-1, 100-2, 100-3, and 100-4 according to the present disclosure.

Meanwhile, although FIG. 1 illustrates and describes the electronic apparatus and the display apparatus as being separate from each other, one display apparatus and one electronic apparatus may be implemented as one apparatus in an implementation. In addition, a plurality of display apparatuses and one electronic apparatus may be implemented as one apparatus.

FIG. 2 is a block diagram provided to explain a configuration of an electronic apparatus according to one or more embodiments.

According to FIG. 2, the electronic apparatus 100-1 may include memory 110, an interface 120, and at least one processor 130.

The memory 110 may store data necessary for implementing various embodiments of the electronic apparatus 100-1 according to one or more embodiments of the present disclosure. The memory 110 may store luminance information generated by itself in a process described below, luminance information provided from another apparatus, and the like.

In the present disclosure, "luminance information" may be a ratio at which a user does not perceive a reduction even when a luminance value (or brightness value) is adjusted by a specific ratio, and may be calculated in various manners. For example, a "Brightness Optimization," "Motion Lighting," or "IPS" scheme may be used, and a scheme other than the above-described three schemes may be applied.

Here, "Brightness Optimization" is a scheme of adjusting brightness according to an ambient light condition. Specifically, when an environment in which the display apparatus is disposed is dark, the scheme reflects that it is difficult for a user to perceive a difference even when the display apparatus operates at brightness lower than reference brightness. When "Brightness Optimization" is used, power consumption may be reduced by changing screen brightness (or a luminance level) to a lower ratio in an environment having low ambient illuminance. Such a brightness adjustment algorithm based on illuminance may achieve energy savings of 25% based on 90 Lux.

In addition, "Motion Lighting" is a scheme of adjusting brightness according to a degree of motion (or movement) in an image. For example, when there is a large amount of motion in an image (for example, a shooting scene, an action scene, or the like), the scheme reflects that it is difficult for a user to perceive a difference even when brightness of the image is reduced. Accordingly, screen brightness may not be adjusted or may be reduced only slightly in an image having little motion, whereas power consumption may be reduced by changing screen brightness (or luminance) in an image having a large amount of motion. In this case, motion may be calculated in various manners, and a ratio between a calculated motion value and brightness may be calculated using a linear or nonlinear scheme. Such a brightness adjustment algorithm based on motion may generally achieve energy savings of 3%.

In addition, "IPS" is a scheme of adjusting brightness according to complexity in an image. For example, when complexity of an image is high (for example, a complex skyline or the like), the scheme reflects that it is difficult for a user to perceive a difference even when brightness of the image is reduced. Accordingly, screen brightness may not be adjusted or may be reduced only slightly for an image having low complexity, whereas power consumption may be reduced by changing screen brightness for an image having high complexity. In this case, complexity may be calculated in various manners, and a ratio between a calculated complexity value and brightness may be calculated using a linear or nonlinear scheme. Such a brightness adjustment algorithm based on complexity may generally achieve energy savings of 5%.

The memory 110 may be implemented in the form of a memory embedded in the electronic apparatus 100-1 or in the form of a memory detachable from the electronic apparatus 100-1 according to a purpose of data storage. For example, data for driving the electronic apparatus 100-1 may be stored in a memory embedded in the electronic apparatus 100-1, and data for an extended function of the electronic apparatus 100-1 may be stored in a memory detachable from the electronic apparatus 100-1.

Meanwhile, the memory embedded in the electronic apparatus 100-1 may be implemented as at least one of a volatile memory (for example, a dynamic random access memory (DRAM), a static random access memory (SRAM), or a synchronous dynamic random access memory (SDRAM)), a non-volatile memory (for example, a one time programmable read only memory (OTPROM), a programmable read only memory (PROM), an erasable and programmable read only memory (EPROM), an electrically erasable and programmable read only memory (EEPROM), a mask ROM, a flash ROM, or a flash memory (for example, NAND flash or NOR flash)), a hard drive, or a solid state drive (SSD).

In addition, the memory detachable from the electronic apparatus 100-1 may be implemented in a form such as a memory card (for example, compact flash (CF), secure digital (SD), micro secure digital (Micro-SD), mini secure digital (Mini-SD), extreme digital (xD), or a multi-media card (MMC)), or an external memory connectable to a USB port (for example, a USB memory).

The memory 110 may include various instructions necessary for operations of the at least one processor 130. Here, the instructions may include an instruction for calculating luminance information, an instruction for sharing the calculated luminance information with other apparatuses, an instruction for calculating a luminance correction value, and the like.

In the present disclosure, the "luminance correction value" may be a luminance correction value to be commonly applied to a plurality of display apparatuses in the display group 200. Meanwhile, although it has been illustrated and described in the present disclosure that the plurality of display apparatuses in the display group 200 use a common correction value, in an implementation, a form in which a degree of correction differs according to a degree of separation from a center of the display group based on an arrangement form of the display apparatuses may also be used.

In addition, the "luminance correction value" may be referred to by being replaced with various expressions indicating the same/similar concept. For example, the "luminance correction value" may be replaced with various expressions such as "brightness correction data," "luminous intensity correction information," "luminance adjustment information," "luminance correction information," "brightness correction value," "common correction value," and "pixel value correction information."

The interface 120 may include a communication interface, an operation interface, an input/output interface, and the like. The electronic apparatus 100-1 may be connected to the display apparatus 210-1 through the interface 120.

According to one or more embodiments, the communication interface is configured to perform communication with the display apparatus 210-1 or an external source apparatus. The communication interface may include at least one wireless communication module, at least one wired communication module, and the like. Each communication module may be implemented in the form of at least one hardware chip. The wireless communication module may include at least one of a Wi-Fi module, a Bluetooth module, an infrared communication module, or another communication module. In addition, the communication interface may include at least one communication chip configured to perform communication according to various wireless communication standards such as Zigbee, 3rd Generation (3G), 3rd Generation Partnership Project (3GPP), Long Term Evolution (LTE), LTE Advanced (LTE-A), 4th Generation (4G), and 5th Generation (5G). The wired communication module may include, for example, at least one of a Local Area Network (LAN) module, a 3.5pi cable, I2C, a Universal Asynchronous Receiver/Transmitter (UART), HDBaseT (HDBT), an Ethernet module, a pair cable, a coaxial cable, an optical fiber cable, or an Ultra Wide-Band (UWB) module. The communication interface may be implemented in various forms as described above and perform communication with an external display apparatus or an external source apparatus, thereby providing a corrected image signal to the external display apparatus.

The communication interface may transmit the calculated luminance information and/or luminance correction value as described above to another electronic apparatus or display apparatus. In addition, the communication interface may receive luminance information calculated by another apparatus from the other apparatus, or may receive a luminance correction value calculated by another apparatus.

The operation interface is configured to receive a user manipulation. The operation interface may include various buttons provided on a main body of the electronic apparatus 100-1.

The input/output interface is configured to input and output various external signals. The input/output interface may be connected to various external memories or external sources (for example, a web server, a user terminal apparatus, or the like) and receive various data. The input/output interface may be implemented as at least one or more interfaces among a High Definition Multimedia Interface (HDMI), a Mobile High-Definition Link (MHL), a Universal Serial Bus (USB), a USB Type-C, a DisplayPort (DP), Thunderbolt, a Video Graphics Array (VGA) port, an RGB port, a D-subminiature (D-SUB), and a Digital Visual Interface (DVI). At least a portion of the input/output interface may be connected to the communication interface. For example, the input/output interface may transmit information received from an external source apparatus to the communication interface, or may transmit information received through the communication interface to an external display apparatus.

The at least one processor 130 controls overall operations of the electronic apparatus 100-1. Specifically, the at least one processor 130 may be connected to the memory 110 and the interface 120, and may control overall operations of the electronic apparatus 100-1 by executing at least one instruction stored in the memory 110.

The at least one processor 130 may be implemented as a digital signal processor (DSP) configured to process a digital signal or a microprocessor. However, the present disclosure is not limited thereto, and the at least one processor 130 may include one or more of a central processing unit (CPU), a Micro Controller Unit (MCU), a micro processing unit (MPU), a Neural Processing Unit (NPU), a controller, an application processor (AP), a communication processor (CP), an ARM processor, or an Artificial Intelligence (AI) processor, or may be defined by a corresponding term. In addition, the processor 130 may be implemented as a System on Chip (SoC) or a large scale integration (LSI) in which a processing algorithm is embedded, or may be implemented in the form of a Field Programmable Gate Array (FPGA). The at least one processor 130 may perform various functions by executing computer executable instructions stored in the memory 110.

Meanwhile, in an implementation, instead of one of the above-described configurations performing all instructions, a plurality of configurations may perform some operations of the instructions, that is, one instruction may be divided and processed by the plurality of configurations.

When a method according to various embodiments of the present disclosure includes a plurality of operations, the plurality of operations may be performed by one processor or may be performed by a plurality of processors. The at least one processor 130 may be implemented as a single core processor including one core, or may be implemented as one or more multicore processors including a plurality of cores (for example, homogeneous multicore or heterogeneous multicore). Hereinafter, for convenience of description, the at least one processor 130 will be referred to as the processor 130.

The processor 130 may determine whether luminance correction is necessary. Specifically, the processor 130 may identify whether a user has turned on a luminance correction function, or whether an operating condition or the like is satisfied.

When luminance correction is necessary, the processor 130 may identify whether there is existing luminance correction information, and may use a previously calculated correction value when there is a previously calculated correction value. However, when a preset calculation period has elapsed or when a scene is changed to a new scene different from a previous scene, the processor 130 may determine that calculation of luminance information is necessary and may perform a subsequent operation (that is, update of the luminance correction value). In addition, since a previously calculated correction value may not be applicable to a current scene, the processor 130 may temporarily prevent the correction value calculated for the previous scene from being applied.

The processor 130 obtains luminance information of image data based on an image signal. Specifically, as described above, the processor 130 may calculate luminance information according to a "Motion Lighting" and/or "IPS" scheme based on the image signal. For example, when the processor uses two schemes such as "Motion Lighting" and "IPS," the processor may obtain first luminance information corresponding to motion information in the image data and/or second luminance information corresponding to complexity in the image data, respectively.

In addition, the processor 130 may obtain illuminance information generated by a sensor provided in the corresponding display apparatus from the display apparatus, and may calculate luminance information according to the "Brightness Optimization" scheme based on the obtained illuminance information.

The processor 130 obtains luminance information of other electronic apparatuses 100-2, 100-3, and 100-4 in the display group. Specifically, the processor 130 may obtain luminance information of another display apparatus through the communication interface. Correspondingly, the processor 130 may also transmit luminance information calculated by itself to the other electronic apparatuses 100-2, 100-3, and 100-4.

The processor 130 may obtain a luminance correction value to be commonly applied to a plurality of display apparatuses in the display group based on luminance information of the display apparatus and luminance information of another display apparatus.

For example, when only one algorithm is used, or when each display apparatus uses a plurality of algorithms but calculates and provides luminance information as one value, the processor 130 may select luminance information having the highest ratio among a plurality of pieces of luminance information, and may determine a numerical value corresponding to the selected luminance information as the luminance correction value.

In addition, in an implementation, the luminance correction value may be obtained through an operation such as averaging numerical values in a plurality of pieces of luminance information. In addition, in order to prevent flicker, the above-described luminance correction value (or luminance information) may have a lower limit criterion (or filtering value), and a previous calculation value and a current calculation value may be used together. For example, the following equation may be used. 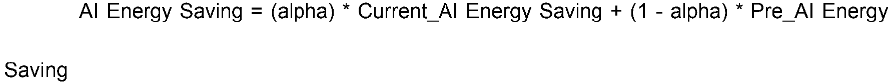 AI Energy Saving = (alpha) * Current_AI Energy Saving + (1 - alpha) * Pre_AI Energy Saving

AI Energy Saving is a luminance correction value to be applied to the system, Current_AI Energy Saving is a currently calculated luminance correction value, Pre_AI Energy Saving is a luminance correction value calculated immediately before, and alpha is a ratio value between 0 and 1.

Meanwhile, when a plurality of pieces of luminance information according to each of a plurality of algorithms are collected, the processor 130 may identify luminance information to be applied for each algorithm, and may obtain a luminance correction value based on a combination of the identified pieces of luminance information. For example, the processor 130 may identify first selection information among first luminance information of the display apparatus and first luminance information of another display apparatus based on a preset criterion, identify second selection information among second luminance information of the display apparatus and second luminance information of another display apparatus, and obtain a luminance correction value using the first selection information and the second selection information.

When such a luminance correction value is identified, the processor 130 may cause an image reflecting the corresponding luminance correction value to be displayed on the display apparatus 210-1. Such application may use two schemes. When the display apparatus 210-1 is capable of performing luminance correction by itself, the processor 130 may control the communication interface to transmit the obtained luminance correction value to the display apparatus. In such a case, a scheme may be used in which only one electronic apparatus 100-1 in the display group calculates a luminance correction value and provides the calculated luminance correction value to all display apparatuses 200-1, 200-2, 200-3, and 200-4.

Alternatively, the processor 130 may correct an image signal to be provided to the display apparatus 210-1 based on the obtained luminance correction value, and may provide the corrected image signal to the display apparatus 210-1 through the interface 120.

Meanwhile, although the above description has been made under an assumption that four electronic apparatuses individually calculate and use luminance correction values, in an implementation, a scheme may be used in which only one electronic apparatus in the display group collects luminance information, calculates a luminance correction value, and provides the calculated luminance correction value to other electronic apparatuses. In other words, one electronic apparatus among a plurality of electronic apparatuses may operate as a master, and the remaining apparatuses may operate as slaves.

In the description of FIG. 3 below, a method in which the electronic apparatus 100-1 provides a corrected image signal to the display apparatus 210-1 will be described in detail.

FIG. 3 is a view provided to explain an operation of a display system according to one or more embodiments.

According to FIG. 3, an external source apparatus 300 may store software for managing and controlling the display group 200. The external source apparatus 300 may receive information on a plurality of display apparatuses 210-1, 210-2, 210-3, 210-4, ..., and 210-n from a plurality of electronic apparatuses 100-1, 100-2, 100-3, 100-4, ..., and 100-n, and the external source apparatus 300 may identify a shape of the display group 200, an overall resolution, and a position of the display apparatus 210-1 using software for managing the display group 200.

Here, "shape information of the display group 200" may include information on the number of display apparatuses included in the display group 200, information on which shape the form of the display group 200 corresponds to, and the like.

In addition, "overall resolution information of the display group 200" may include information on the number of pixels included in the display group 200, a pixel pitch, and an arrangement state of the pixels.

In addition, "position information of the display apparatus 210-1" may include information on a position of the display apparatus 210-1 in the display group 200. For example, referring back to FIG. 1, the "position information of the display apparatus 210-1" may include information indicating an upper left position of the display group 200.

Based on such information, the external source apparatus 300 may generate a partial image to be provided to each electronic apparatus 100-1 based on the identified shape information of the display group 200, the overall resolution information, and the position information of the display apparatus 210-1, and may provide the corresponding partial image to the electronic apparatus 100-1.

The plurality of electronic apparatuses 100-1, 100-2, 100-3, 100-4, ..., and 100-n may receive image signals from the external source apparatus 300, and provide corrected image signals to the plurality of display apparatuses 210-1, 210-2, 210-3, 210-4, ..., and 210-n included in the display group 200.

Since a method in which each of the plurality of electronic apparatuses 100-1, 100-2, 100-3, 100-4, ..., and 100-n provides a corrected image signal to each of the plurality of display apparatuses 210-1, 210-2, 210-3, 210-4, ..., and 210-n is the same, the following description will be made, for convenience of description, based on a method in which the electronic apparatus 100-1 provides a corrected image signal to the display apparatus 210-1.

The electronic apparatus 100-1 may obtain, from the external source apparatus 300, a partial image corresponding to a region to be displayed by the display apparatus 210-1 in the entire image. In addition, the electronic apparatus 100-1 may obtain luminance information on the corresponding partial image.

Such an operation may be performed in the same manner in the other electronic apparatuses 100-2, 100-3, and 100-4, so that the electronic apparatuses 100-1, 100-2, 100-3, and 100-4 in the display group may share with each other luminance information on images to be displayed on the respective display apparatuses.

Accordingly, each electronic apparatus may secure luminance information directly calculated by itself and luminance information calculated by another electronic apparatus, and based thereon, may obtain a luminance correction value to be commonly applied to all display apparatuses in the display group.

Although the external source apparatus 300 is illustrated as a desktop PC in FIG. 3, this is merely an example, and it is obvious that the external source apparatus 300 may be implemented as various electronic apparatuses capable of providing an original image signal to the electronic apparatus 100-1, such as a smartphone, a laptop PC, a tablet PC, or a server apparatus.

Although the above description has described only that the electronic apparatus 100-1 may identify a degree of separation from a center for each of a plurality of pixels included in the display apparatus 210-1 in units of mm or pixels, the electronic apparatus 100-1 may normalize a distance identified in units of mm or pixels to a value between 0 and 1 and calculate a degree of separation from the center.

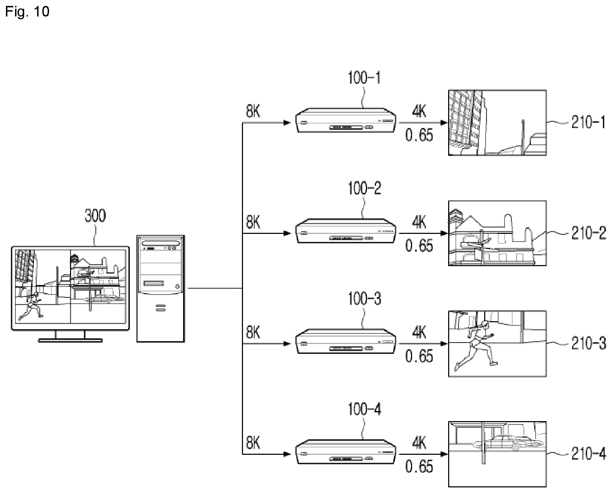

According to one or more embodiments, although it has been illustrated and described that the source apparatus provides a partial image to each electronic apparatus, in an implementation, the source apparatus may provide an entire image to each electronic apparatus. In other words, a process of cropping or extracting a partial image from the entire image may be performed in each electronic apparatus. Such an example will be described below with reference to FIG. 10.

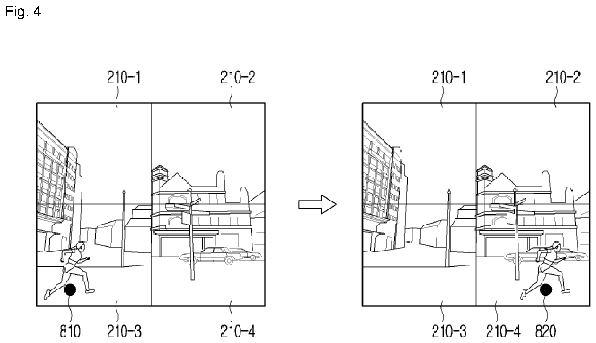

FIG. 4 is a view provided to explain a display operation in a display system according to one or more embodiments.

Referring to FIG. 4, one content image may be displayed by four display apparatuses 210-1, 210-2, 210-3, and 210-4 individually displaying respective partial images.

Here, a main object may be positioned in a third partial region, and thus, the third partial region may have a higher degree of motion or higher image complexity than the other partial images. Accordingly, when IPS and Motion Lighting are calculated separately for each partial image, brightness information having a low ratio (for example, 0.7) may be calculated only for the third partial region, and brightness information having a relatively high ratio (for example, 0.9) may be calculated for the remaining partial regions. When brightness of the four partial regions is controlled using individual values as described above, only the third display apparatus 210-3 displaying the third partial region among the four partial images performs brightness adjustment at a low ratio. Accordingly, a viewer views an image in which only a portion of the entire image (that is, the third partial region) is displayed dark. In particular, the difference may be conspicuous at an upper boundary and a right-side boundary of the second partial region that adjoin the third partial region.

When operating in this manner, a sense of unity of the screen is broken, and thus, a user may feel that image quality is poor.

In addition, conversely, when the main object moves from the third partial region to a fourth partial region, only the fourth partial region 200-4 has a lower brightness value than the other partial regions at this point.

In order to solve such a problem, as described above, in the present disclosure, each electronic apparatus calculates luminance information, mutually shares the calculated luminance information, and each electronic apparatus obtains and uses a common luminance correction value using the shared luminance information.

Through such an operation, all of the first to fourth partial regions may operate with brightness corrected at a common ratio. Hereinafter, a specific scheme of calculating a luminance correction value will be described.

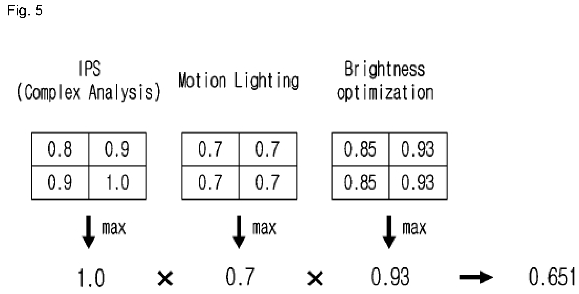

FIG. 5 is a view provided to explain an example of an operation of calculating a correction value according to another embodiment.

Referring to FIG. 5, all three brightness adjustment algorithms are used. For example, each of four electronic apparatuses may calculate first correction information, second correction information, and third correction information, and may share the calculated information with the other electronic apparatuses.

In a state in which the calculated information is shared as described above, each electronic apparatus may calculate a correction value for each item to be applied to the entire system. For example, for IPS, each electronic apparatus may select 1, which is the highest value among complexity values of the four apparatuses. In addition, for Motion Lighting, each electronic apparatus may select 0.7, which is the highest value among complexity values of the four apparatuses. Further, for Brightness Optimization, each electronic apparatus may select 0.93, which is the highest value among values of the four apparatuses.

By multiplying the respective selected values as described above, a luminance correction value of 0.651 may finally be calculated. Since each electronic apparatus calculates the luminance correction value using a common algorithm (that is, a common calculation scheme), the same luminance correction value may be calculated.

Meanwhile, although it has been described above that the highest value is used for one piece of information (or algorithm), an average value may be used in an implementation. In addition, although the highest value is used for all four pieces of information, it is also possible to use the highest value for some configurations and use an average for other configurations.

In addition, although it has been illustrated and described that four pieces of information are combined, only two of the above-described pieces of information or only one thereof may be used. Further, other information (or another brightness adjustment algorithm) not illustrated herein may also be used.

In addition, in the process of combining a plurality of pieces of information, although a scheme of multiplying the selected values by each other has been used above, in an implementation, it is also possible to assign a weight to each item and calculate a final luminance correction value using the weighted values.

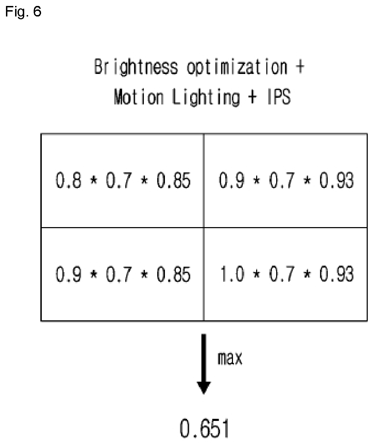

FIG. 6 is a view provided to explain an operation of calculating a correction value according to another embodiment.

Referring to FIG. 6, all three brightness adjustment algorithms are used. For example, each of four electronic apparatuses may individually calculate first correction information, second correction information, and third correction information, generate one individual apparatus correction information by combining the calculated three pieces of correction information, and share the corresponding individual apparatus correction information.

When the individual apparatus correction information individually calculated by the respective electronic apparatuses is shared as described above, each electronic apparatus may select correction information having the highest value among the corresponding correction information and obtain a luminance correction value.

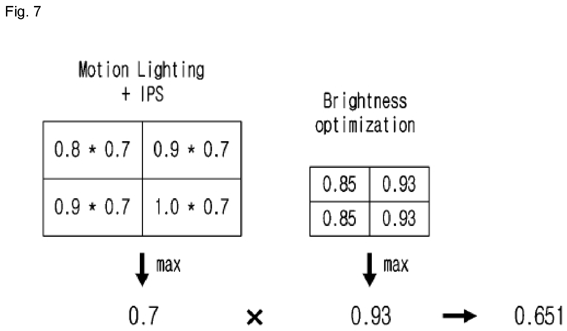

FIG. 7 is a view provided to explain an operation of calculating a correction value according to another embodiment.

Referring to FIG. 7, all three brightness adjustment algorithms are used. For example, each of four electronic apparatuses may individually calculate first correction information and second correction information, generate individual apparatus correction information by combining one piece of the calculated correction information, and share the individual apparatus correction information.

In addition, third correction information corresponding to a degree of illuminance may be separately obtained. As a scheme of sharing the third correction information, one electronic apparatus may obtain illuminance information from each display apparatus and share the illuminance information, or each electronic apparatus may obtain illuminance information from a display apparatus connected thereto and share the obtained illuminance information. In addition, a scheme in which one of the display apparatuses collects pieces of illuminance information of other display apparatuses and provides the collected illuminance information to one electronic apparatus or to each electronic apparatus may also be used.

When the individual apparatus correction information individually calculated by the respective electronic apparatuses is shared as described above, correction information having the highest value among the corresponding correction information may be selected, and a luminance correction value may be obtained through a calculation with a high value corresponding to the third correction information.

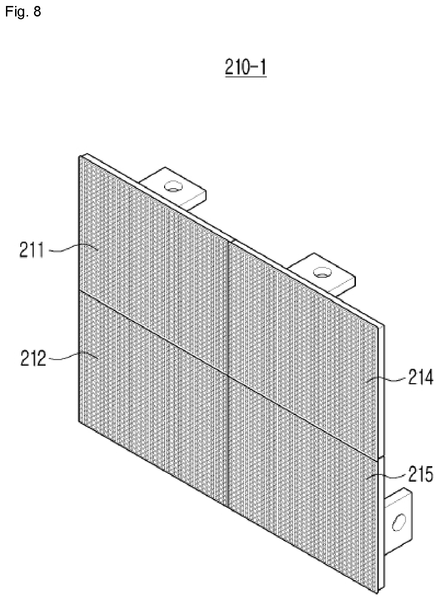

FIG. 8 is a view provided to explain a configuration of a display apparatus according to one or more embodiments.

According to FIG. 8, the display apparatus 210-1 may include a plurality of display modules 211, 212, 214, and 215.

Each of the plurality of display modules 211, 212, 214, and 215 may include a plurality of LED elements. Here, each of the plurality of LED elements may be implemented as an element in which a red LED, a green LED, and a blue LED are implemented as one pixel. In addition, the plurality of LED elements may be implemented as micro LEDs. A micro LED is an LED having a size of approximately 5 to 100 micrometers, and refers to an ultra-small light emitting element that emits light by itself without a color filter.

The display apparatus 210-1 may include a plurality of coupling portions capable of being coupled with another display apparatus. Accordingly, the display apparatus 210-1 may form the display group 200 by being coupled with another display apparatus.

The display apparatus 210-1 may be implemented in a bezel-less form, and thus may display a seamless image even when coupled with other display apparatuses to form the display group 200 and display one image.

Although FIG. 8 illustrates that the display apparatus 210-1 includes 2 × 2 display modules, this is merely an example, and it is obvious that the display apparatus 210-1 may be configured with n × m display modules (n and m are natural numbers equal to or greater than 2).

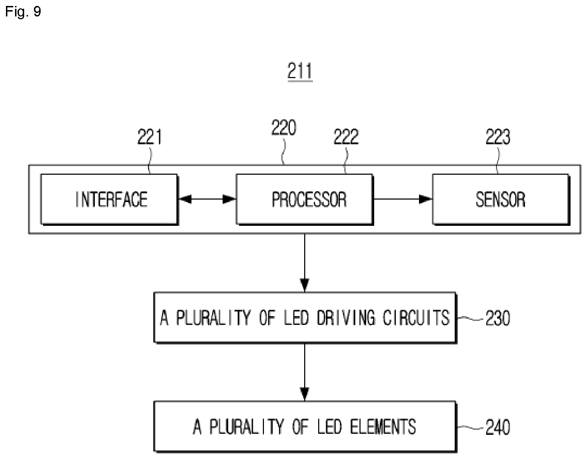

In the description of FIG. 9 below, a method in which the display apparatus 210-1 displays an image will be described in detail.

According to FIG. 9, the display module 211 included in the display apparatus 210-1 may include a driver 220, a plurality of LED driving circuits 230, and a plurality of LED elements 240.

The driver 220 may include an interface 221, a processor 222, and a sensor 223.

The interface 221 may receive an image signal, or may provide an illuminance value detected by a sensor described below to the electronic apparatus 100. Alternatively, the interface 221 may receive a luminance correction value from the electronic apparatus 100.

The sensor 223 may detect illuminance. When such a sensor 223 is disposed in a front direction illustrated in FIG. 8, the sensor 223 may be disposed at a side surface (edge region) of the corresponding display apparatus.

The processor 222 may generate PWM signals corresponding to luminance values corresponding to the respective plurality of LED elements 240, and may provide the PWM signals to the plurality of LED driving circuits 230. In this case, the processor 222 may generate a PWM signal corresponding to the corresponding luminance correction value and the image signal based on the luminance correction value, and may provide the PWM signal to the plurality of LED driving circuits 230.

For example, when an image signal includes information instructing a first pixel to emit light with luminance values of "(R, G, B) = (150, 100, 50)," the processor 222 may generate a PWM signal for causing a red LED element included in the first pixel to emit light with a luminance value of 150, a green LED element included in the first pixel to emit light with a luminance value of 100, and a blue LED element included in the first pixel to emit light with a luminance value of 50, and may provide the PWM signal to an LED driving circuit connected to the first pixel.

In such a case, when the luminance correction value is a value such as 0.8, the processor 222 may adjust luminance values of the individual elements to values such as (120, 80, 40), and may generate a PWM signal corresponding to the adjusted luminance values. Meanwhile, although the above-described luminance correction value has been expressed above as a real number in a range of 0 to 1, in an implementation, the luminance correction value may be information represented by a binary number such as 8 bits or 16 bits.

Although the above description has described that the driver 220 includes only the interface 221, the processor 222, and the sensor 223, the driver 220 may further include a timing controller, a data driver, a gate driver, and the like.

The timing controller may receive an input signal (IS), a horizontal synchronization signal (Hsync), a vertical synchronization signal (Vsync), a main clock signal (MCLK), and the like from the outside, generate an image data signal, a scan control signal, a data control signal, a light emission control signal, and the like, and provide the generated signals to a substrate, the data driver, the gate driver, and the like.

In particular, the timing controller may apply at least one of various signals (Emi, Vsweep, Vini, VST, Test/Discharging) to the plurality of LED driving circuits 230. In addition, the timing controller may apply a control signal (MUX Sel R, G, B) for selecting one sub-pixel among R, G, and B sub-pixels to the plurality of LED driving circuits 230.

The data driver (or source driver or data driving unit) is a means for generating a data signal, and may receive image data of R/G/B components and the like and generate a data voltage (for example, a PWM data voltage).

The gate driver (or gate driving unit) is a means for generating various control signals such as a control signal (SPWM(n)) and a control signal (SPAM). The gate driver may input the generated various control signals to LED driving circuits corresponding to a specific row (or a specific horizontal line) among a plurality of pixels on the substrate, but is not limited thereto.

According to an embodiment, the gate driver may apply a driving voltage (VDD) to a driving voltage terminal of the LED driving circuit.

The data driver and the gate driver may be implemented such that all or a portion thereof is included in a Thin Film Transistor (TFT) layer formed on one surface of glass of the substrate, or may be implemented as separate semiconductor ICs and disposed on another surface of the glass.

The plurality of LED driving circuits 230 may receive a PWM data voltage in a scanning period.

In addition, during an emission period, the plurality of LED driving circuits 230 may provide a driving current to a plurality of light emitting elements for a time corresponding to the input PWM data voltage, thereby driving the plurality of LED elements 240.

As described above, the display apparatus 210-1 may include the plurality of display modules 211, 212, 214, and 215, and each of the plurality of display modules 211, 212, 214, and 215 may include the driver 220, the plurality of LED driving circuits 230, and the plurality of LED elements 240, and thus may generate a PWM signal based on a corrected image signal received from the electronic apparatus 100-1 and display an image with a corrected luminance value.

FIG. 10 is a view provided to explain an operation of a display system according to another embodiment.

In FIG. 3, the external source apparatus 300 stores position information and provides a partial image of an original image to each of the electronic apparatuses 100-1, 100-2, 100-3, and 100-4, whereas in FIG. 10, each electronic apparatus stores the above information, and generation of a partial image is also performed by each electronic apparatus.

Referring to FIG. 10, the external source apparatus 300 may provide image data to each of the electronic apparatuses 100-1, 100-2, 100-3, and 100-4. Since such an external source apparatus 300 does not require a special function as in FIG. 3, the external source apparatus 300 may be a general server apparatus, a broadcasting station, or the like.

For example, such an external source apparatus may provide a high-resolution image such as an 8K image to each of the electronic apparatuses 100-1, 100-2, 100-3, and 100-4.

Each of the electronic apparatuses 100-1, 100-2, 100-3, and 100-4 may generate an image to be provided to each of the display apparatuses 210-1, 210-2, 210-3, and 210-4 based on position information of the apparatus itself.

In addition, each of the electronic apparatuses 100-1, 100-2, 100-3, and 100-4 may obtain a luminance correction value. Specifically, in FIG. 3, since each electronic apparatus may obtain only a partial image rather than an entire image, a scheme of calculating luminance information on the partial image and sharing the calculated luminance information is used, whereas in FIG. 10, since each electronic apparatus may obtain the entire image, a luminance correction value may be directly calculated through the obtained entire image.

However, since a brightness value may differ for each apparatus based on an illuminance sensor, each of the electronic apparatuses 100-1, 100-2, 100-3, and 100-4 may calculate a luminance correction value using the scheme as illustrated in FIG. 7. In other words, correction information on "Motion Lighting" and "IPS" may be calculated using the entire image, luminance information corresponding to "Brightness Optimization" may be separately calculated based on an illuminance value obtained from each display apparatus, and a luminance correction value may be calculated by combining the two pieces of information.

Meanwhile, in an implementation, only one of the plurality of electronic apparatuses may perform the above-described operation to obtain a luminance correction value, and a scheme in which one electronic apparatus provides the luminance correction value to all four display apparatuses may also be used.

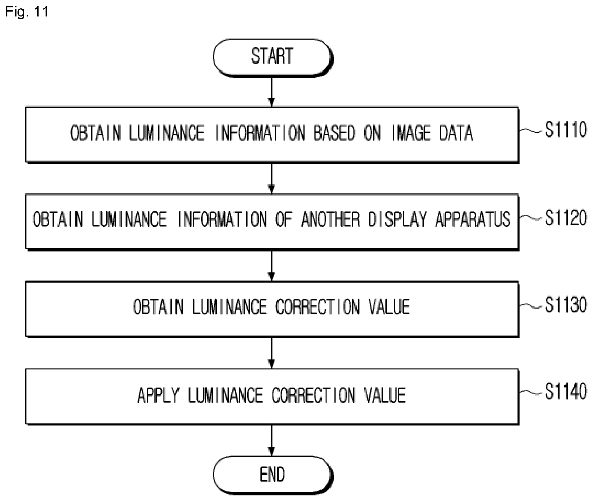

FIG. 11 is a flowchart provided to explain a control operation of an electronic apparatus according to an embodiment.

First, luminance information of image data is obtained based on an image signal to be displayed on a display apparatus. For example, at least one of first luminance information corresponding to motion information in the image data or second luminance information corresponding to complexity in the image data may be obtained. When a plurality of pieces of luminance information are used, the two pieces of luminance information may be combined (or multiplied) and used.

In addition, as luminance information, illuminance information detected by a sensor of the display apparatus may be obtained, and third luminance information based on the obtained illuminance information may also be used.

Subsequently, luminance information of another display apparatus in the display group is obtained (S1120).

A luminance correction value to be commonly applied to a plurality of display apparatuses in the display group is obtained based on luminance information of the display apparatus and luminance information of the another display apparatus (S1130). For example, first selection information may be identified among first luminance information of the display apparatus and first luminance information of the another display apparatus based on a preset criterion, second selection information may be identified among second luminance information of the display apparatus and second luminance information of the another display apparatus, and a luminance correction value may be obtained using the first selection information and the second selection information.

In addition, one of a first numerical value of the luminance information of the display apparatus and a second numerical value of the luminance information of the another display apparatus may be selected based on a preset criterion, thereby obtaining a luminance correction value to be commonly applied to a plurality of display apparatuses in the display group.

Subsequently, the electronic apparatus may apply the obtained luminance correction value (S1140). For example, the obtained luminance correction value may be provided to the display apparatus. Alternatively, an image signal to be provided to the display apparatus may be corrected corresponding to the obtained luminance correction value, and the corrected image signal may be provided to the display apparatus.

The various methods described with reference to FIG. 11 may be performed by an electronic apparatus having the configuration illustrated in FIG. 2, but are not necessarily limited thereto, and may also be performed by an electronic apparatus having various configurations.

Meanwhile, although an order is mapped to all operations in FIG. 11 for convenience of description, it is obvious that the order of steps that are unrelated to order or capable of being performed in parallel is not necessarily limited to the corresponding order.

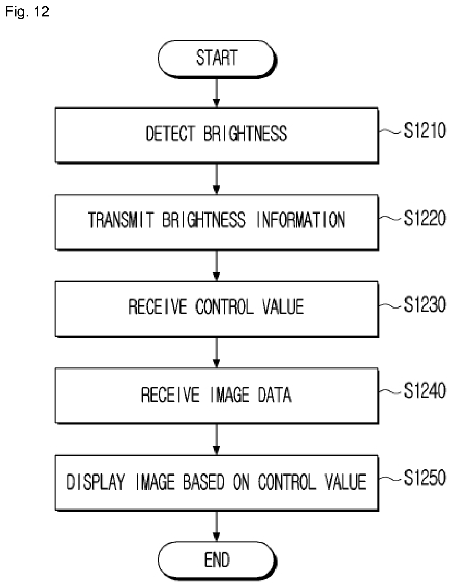

FIG. 12 is a flowchart provided to explain an operation of a display module according to an embodiment.

Referring to FIG. 12, the display apparatus may detect illuminance using an illuminance sensor (S1210), and may transmit the detected illuminance to the electronic apparatus (S1220). Such a detection operation may be performed at preset periods or may be performed when a preset event occurs. For example, the preset event may be a case in which ambient illuminance changes by a predetermined value or more compared to previous ambient illuminance.

Such illuminance detection and transmission operations may be omitted when a brightness control algorithm using the corresponding illuminance information is not used.

The display apparatus may receive a luminance correction value from the electronic apparatus (S1230). Such a luminance correction value may be received from an electronic apparatus that transmits image data, or may be received through another separate electronic apparatus.

Subsequently, the display apparatus may receive image data corresponding to an image (S1240).

When such image data is received, a PWM signal may be generated based on the received image data and the above-described luminance correction value, and the generated PWM signal may be provided to a plurality of LEDs to display an image (S1250). For example, when a PWM signal calculated based on the image data has an 80% duty and the luminance correction value has a numerical value such as approximately 0.9, the display apparatus may generate a PWM signal having approximately a 0.9 × 0.8 = 72% duty.

In addition, when the above-described PWM signal is individually generated for each sub-pixel, the above-described scheme may be similarly applied to each sub-pixel.

The various methods described with reference to FIG. 12 may be performed by an electronic apparatus having the configuration illustrated in FIG. 9, but are not necessarily limited thereto, and may also be performed by an electronic apparatus having various configurations.

Meanwhile, although an order is mapped to all operations in FIG. 12 for convenience of description, it is obvious that the order of steps that are unrelated to order or capable of being performed in parallel is not necessarily limited to the corresponding order.

Meanwhile, methods according to at least some of the various embodiments of the present disclosure described above may be implemented in the form of an application installable in an existing electronic apparatus.

In addition, methods according to at least some of the various embodiments of the present disclosure described above may be implemented only by a software upgrade or a hardware upgrade of an existing electronic apparatus.

In addition, methods according to at least some of the various embodiments of the present disclosure described above may be performed through an embedded server provided in an electronic apparatus or an external server of at least one electronic apparatus.

Meanwhile, according to an embodiment of the present disclosure, the various embodiments described above may be implemented as software including instructions stored in machine-readable storage media that can be read by a machine (for example, a computer). The machine is an apparatus capable of invoking stored instructions from a storage medium and operating according to the invoked instructions, and may include an electronic apparatus according to the disclosed embodiments (for example, the electronic apparatus 100-1 or the display apparatus 200-1). When an instruction is executed by a processor, the processor may directly perform a function corresponding to the instruction, or may perform the function using other components under control of the processor. The instruction may include code generated or executed by a compiler or an interpreter. The machine-readable storage medium may be provided in the form of a non-transitory storage medium. Here, the "non-transitory storage medium" merely means that the storage medium is a tangible apparatus and does not include a signal (for example, an electromagnetic wave), and the term does not distinguish between a case in which data is semi-permanently stored in the storage medium and a case in which data is temporarily stored therein. For example, the "non-transitory storage medium" may include a buffer in which data is temporarily stored. According to an embodiment, a method according to various embodiments disclosed in the present document may be provided by being included in a computer program product. The computer program product may be traded as a product between a seller and a purchaser. The computer program product may be distributed in the form of a machine-readable storage medium (for example, a compact disc read only memory (CD-ROM)), or may be distributed online (for example, downloaded or uploaded) through an application store (for example, Play Store^{™}) or directly between two user apparatuses (for example, smartphones). In the case of online distribution, at least a portion of the computer program product (for example, a downloadable app) may be at least temporarily stored or temporarily generated in a machine-readable storage medium such as a memory of a manufacturer's server, a server of an application store, or a relay server.

Various embodiments of the present disclosure may be implemented as software including instructions stored in machine-readable storage media that can be read by a machine (for example, a computer). The machine is an apparatus capable of invoking stored instructions from a storage medium and operating according to the invoked instructions, and may include an electronic apparatus according to the disclosed embodiments (for example, the electronic apparatus 100-1).

When the above-described instruction is executed by a processor, the processor may directly perform a function corresponding to the instruction or may perform the function using other components under control of the above-described processor. The instruction may include code generated or executed by a compiler or an interpreter.

Although preferred embodiments of the present disclosure have been illustrated and described above, the present disclosure is not limited to the above-described specific embodiments, and various modifications may be made by those skilled in the art to which the present disclosure pertains without departing from the gist of the present disclosure claimed in the claims, and such modifications should not be individually understood apart from the technical spirit or prospect of the present disclosure.

## Claims

1. An electronic apparatus connected to a display apparatus that belongs to a display group, the electronic apparatus comprising:
an interface configured to receive an image signal to be displayed on the display apparatus;
memory storing at least one instruction; and
at least one processor configured to, by executing the at least one instruction, provide image data corresponding to the image signal to the display apparatus,
wherein the at least one processor is configured to:
obtain luminance information of the image data based on the image signal to be displayed on the display apparatus, and obtain luminance information of another display apparatus in the display group; and
obtain a luminance correction value to be commonly applied to a plurality of display apparatuses in the display group based on the obtained luminance information of the image data and the luminance information of the other display apparatus.

2. The electronic apparatus of claim 1, wherein the at least one processor is configured to:
obtain at least one of first luminance information corresponding to motion information in the image data or second luminance information corresponding to complexity in the image data.

3. The electronic apparatus of claim 2, wherein the at least one processor is configured to:
obtain the luminance information of the image data by combining the first luminance information and the second luminance information.

4. The electronic apparatus of claim 3, wherein the at least one processor is configured to:
identify first selection information among the first luminance information of the image data and the first luminance information of the other display apparatus based on a preset criterion, identify second selection information among the second luminance information of the image data and the second luminance information of the other display apparatus, and obtain a luminance correction value using the first selection information and the second selection information.

5. The electronic apparatus of claim 1, wherein the at least one processor is configured to:
obtain illuminance information detected by a sensor of the display apparatus, and obtain third luminance information based on the obtained illuminance information.

6. The electronic apparatus of claim 1, wherein the at least one processor is configured to:
select one of a first numerical value of the luminance information of the image data and a second numerical value of the luminance information of the other display apparatus based on a preset criterion, and obtain the luminance correction value.

7. The electronic apparatus of claim 1, wherein the at least one processor is configured to:
control the interface to provide the luminance correction value to the display apparatus.

8. The electronic apparatus of claim 7, wherein the interface comprises a communication interface configured to transmit and receive information to and from another electronic apparatus or another display apparatus in the display group, and
wherein the at least one processor is configured to:
control the communication interface to provide the luminance correction value to the other electronic apparatus or the other display apparatus.

9. The electronic apparatus of claim 1, wherein the at least one processor is configured to:
correct the image signal to be provided to the display apparatus based on the luminance correction value, and control the interface to provide the corrected image signal to the display apparatus.

10. The electronic apparatus of claim 1, wherein the at least one processor is configured to:
store the luminance correction value in the memory, and update the luminance correction value when a scene of the image data is changed or a preset period has elapsed.

11. A control method of an electronic apparatus connected to a display apparatus that belongs to a display group, the method comprising:
obtaining luminance information of image data based on an image signal to be displayed on the display apparatus;
obtaining luminance information of another display apparatus in the display group; and
obtaining a luminance correction value to be commonly applied to a plurality of display apparatuses in the display group based on the luminance information of the image data and luminance information of the other display apparatus.

12. The method of claim 11, wherein the obtaining luminance information comprises:
obtaining at least one of first luminance information corresponding to motion information in the image data or second luminance information corresponding to complexity in the image data.

13. The method of claim 12, wherein the obtaining luminance information comprises:
obtaining the luminance information of the image data by combining the first luminance information and the second luminance information.

14. The method of claim 13, wherein the obtaining a luminance correction value comprises:
identifying first selection information among the first luminance information of the image data and the first luminance information of the other display apparatus based on a preset criterion, identifying second selection information among the second luminance information of the display apparatus and second luminance information of the other display apparatus, and obtaining the luminance correction value using the first selection information and the second selection information.

15. A non-transitory computer-readable recording medium storing a program for executing a control method of an electronic apparatus connected to a display apparatus that belongs to a display group, the method comprising:
obtaining luminance information of image data based on an image signal to be displayed on the display apparatus;
obtaining luminance information of another display apparatus in the display group; and
obtaining a luminance correction value to be commonly applied to a plurality of display apparatuses in the display group based on the luminance information of the image data and luminance information of the conventional other display apparatus.
